# FASCICULE DE BREVET EUROPEEN

(11) **EP 3 303 713 B1**
(45) Date de publication et mention de la délivrance du brevet: **12.02.2020**
(21) Numéro de dépôt: 16727655.9
(22) Date de dépôt: 26.05.2016
(51) Int. Cl.: E03B 1/04, A01G 9/02

(54) **ENSEMBLE DE RÉTENTION TEMPORAIRE D'EAU**
VORRICHTUNG ZUR TEMPORÄREN ZURÜCKHALTERUNG VON WASSER
DEVICE FOR TEMPORARY RETENTION OF WATER

(30) Priorité: 26.05.2015 FR 1554726
(43) Date de publication de la demande: 11.04.2018
(73) Titulaire: Sarl Le Prieure, 41160 Moisy (FR)
(72) Inventeur: LAME, Raphaël, 41160 Moisy (FR); GRIMARD, Jean-Christophe, 41120 Cellettes (FR)
(74) Mandataire: Regimbeau
(86) Numéro de dépôt international: PCT/EP2016/061933
(87) Numéro de publication internationale: WO 2016/189098

(56) Documents cités:
- WO-A1-2015/126993
- GB-A- 2 472 517
- US-A1- 2011 232 381
- US-A1- 2014 129 031

## Description

### DOMAINE TECHNIQUE

Il est question du domaine technique de la gestion des eaux. L'invention concerne plus précisément un ensemble permettant de maîtriser la rétention d'eau, par exemple d'eaux pluviales, par exemple en toiture ou en terrasse ou au niveau du sol.

### ETAT DE LA TECHNIQUE

Compte tenu de l'imperméabilisation croissante des sols urbains et des toitures, la gestion des eaux pluviales est devenue une préoccupation majeure.

En effet, les eaux pluviales ne peuvent pas s'infiltrer dans les sols imperméabilisés ou sur les toitures modernes. Une grande partie des eaux pluviales doit être collectée et traitée. Cette collecte présente un coût financier (canalisations, bassins de rétention, usines de traitement des eaux), et écologique car les eaux sont souillées par de nombreux polluants sur leur parcours (déchets, hydrocarbures, métaux lourds...). Un autre problème résultant de l'imperméabilisation des sols est le risque accru de débordement des réseaux d'assainissement et d'inondations. Lors de violents orages, des volumes d'eaux pluviales de plus en plus importants ruissellent, engendrant un engorgement des canalisations et des débordements qui favorisent la remontée de polluants en surface.

Les ensembles de bacs de toitures, en particulier de bacs de végétalisation, apportent des réponses concrètes à ces problèmes dans la mesure où ils offrent une réelle gestion des eaux pluviales. Ces ensembles permettent une gestion de la rétention des eaux pluviales en jouant un rôle tampon (effet retard) lors de violents orages. Ces ensembles permettent ainsi de réduire le coefficient de ruissellement. Les systèmes actuels de toitures végétalisées présentent cependant certaines limitations. Si les toitures permettent de réduire significativement et temporairement le ruissellement, le coefficient pourrait être réduit davantage, le contrôle de leur débit de fuite est délicat.

En outre, si ces ensembles pour toitures réduisent le coefficient de ruissellement moyen annuel d'environ 50%, elles n'assurent pas un abattement systématique de chaque événement pluvieux. En effet, le coefficient de ruissellement n'est pas réellement maîtrisé mais varie sensiblement en fonction des caractéristiques de l'événement pluvieux et de l'état hydrique de la toiture végétalisée. Ainsi, une toiture végétalisée déjà saturée par de précédentes pluies aura un coefficient de ruissellement quasiment égal à 1 et un effet retard nul, ce qui se traduit par un débit de fuite non réduit et dans tous les cas jamais constant.

Des toitures stockantes assurent une rétention temporaire des eaux pluviales pour les évacuer selon un certain débit de fuite étalé dans le temps.

Les documents EP 1044599 B1 et WO 2010/086369 A1 présentent des éléments permettant de répondre aux exigences de contrôle des eaux pluviales des toitures.

Cependant une meilleure gestion des ressources d'eau, par exemple en toiture ou en terrasse ou au niveau du sol est souhaitable, en particulier pour gérer les situations où l'eau est rare et nécessaire au système, par exemple pour le bon développement des plantes.

US2014/0129031A décrit des systèmes et méthodes pour collecter de l'eau de précipitations. US2011/0232381A décrit un système pour surveiller un niveau d'eau dans un réservoir de stockage sous terre. GB 2472517 A décrit un système de communication de donnée de gestion d'eau.

### PRESENTATION

Un but de l'invention est de proposer un ensemble de rétention temporaire d'eau permettant une meilleure gestion des ressources d'eau.

A cet effet, il est prévu un ensemble de rétention temporaire d'eau comprenant les caractéristiques selon la revendication 1.

L'invention est avantageusement complétée par les caractéristiques suivantes :
- les moyens de communication comprennent en outre des moyens de stockage de données de niveau d'eau ;
- les moyens de communication comprennent des moyens d'horodatage des données issues du capteur de niveau ;
- les moyens de traitement sont configurés pour commander les moyens de régulation en fonction d'une commande de débit ;
- les moyens de communication comprennent une troisième interface de communication sans fil adaptée pour communiquer avec les moyens de régulation ;
- la commande de débit est élaborée par les moyens de traitement au moins à partir des données issues du capteur de niveau ;
- la commande de débit est reçue par la deuxième interface de communication sans fil depuis le serveur distant ;
- le capteur est configuré pour mesurer automatiquement à intervalles réguliers le niveau d'eau ;
- la première interface de communication est adaptée pour mettre en oeuvre une communication sans fil, de préférence une communication locale sans fil, avec le capteur de niveau ;
- le capteur de niveau est un capteur à ultrasons ;
- un capteur de pluviométrie, la première interface de communication étant adaptée pour recevoir des données issues du capteur de pluviométrie ;
- un enregistreur/transmetteur pour collecter et communiquer les valeurs mesurées vers un serveur distant et/ou transmettre un ordre de commande (une consigne) du serveur vers les organes/moyens de régulation
- au moins un bac de végétalisation comprenant la plaque, et une mèche de remontée capillaire disposée pour permettre une remontée d'eau depuis le bac de rétention temporaire d'eau en-dessous de la plaque vers le bac de végétalisation ;
- les moyens de régulation comprennent une électrovanne permettant de bloquer ou de permettre une circulation d'eau, par exemple en remplissage et/ou en vidange ;
- un mur végétalisé, et des moyens d'irrigation du mur végétalisé connectés aux moyens d'entrée et/ou de sortie.

L'invention concerne également un système de gestion d'eau comprenant :
- un ensemble selon l'une des revendications précédentes, et
- un serveur distant configuré pour communiquer avec la deuxième interface.

L'invention selon cet aspect est avantageusement complétée par les caractéristiques suivantes :
- le serveur distant est configuré ou les moyens de traitement sont configurés pour calculer, par exemple en valeur instantanées ou cumulées sur une période de temps, un débit ou un volume d'eau rejeté par le ou les bac(s) de rétention à partir des données traitées ;
- les moyens de traitement sont configurés pour commander les moyens de régulation à partir d'une commande de débit, et le serveur distant est configuré pour :
   ∘ élaborer la commande de débit au moins à partir des données traitées reçues de l'ensemble, et
   ∘ envoyer à l'ensemble la commande de débit ainsi élaborée.

### DESSINS

D'autres objectifs, caractéristiques et avantages apparaitront à la lecture de la description qui suit donnée à titre illustratif et non limitatif en référence aux dessins, parmi lesquels :
- la figure 1 représente une vue d'un système selon un exemple de mode de réalisation de l'invention,

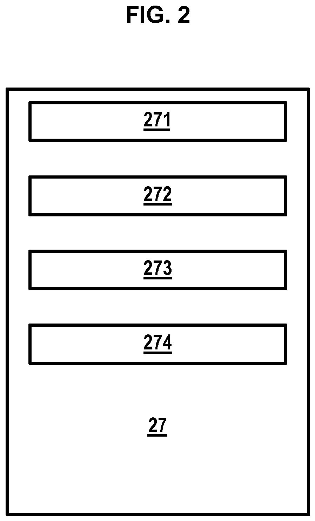

- la figure 2 représente des moyens de communication d'un ensemble d'un système selon la figure 1.

### DESCRIPTION

### Structure générale du système

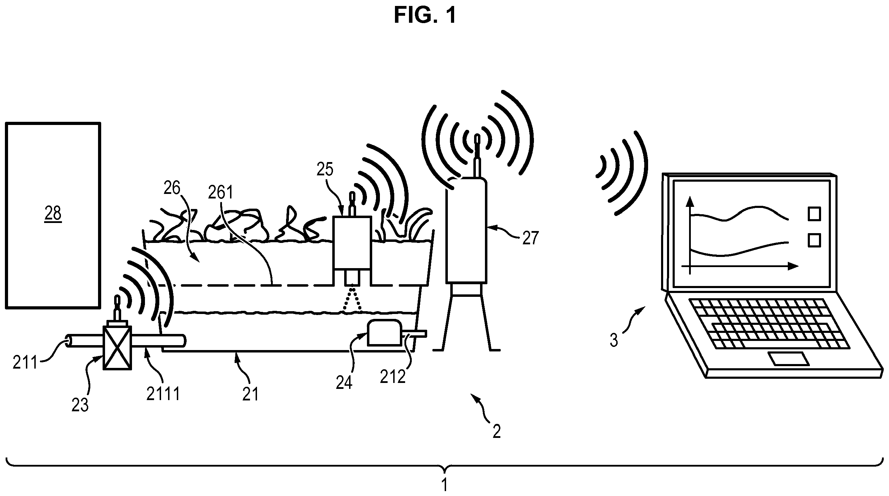

En référence à la figure 1, il est décrit un ensemble 2 de rétention temporaire d'eau, par exemple de rétention temporaire d'eaux pluviales, par exemple de rétention temporaire d'eau en toiture ou en terrasse ou au niveau du sol, ainsi qu'un système 1 de gestion d'eau, comprenant un tel ensemble 2, par exemple de gestion d'eaux pluviales, par exemple de gestion d'eau en toiture ou en terrasse ou au niveau du sol.

Le système 1 comprend en outre un serveur distant 3.

### Ensemble de rétention temporaire d'eau

### Bac de rétention d'eau

L'ensemble 2 comprend au moins un bac de rétention 21 d'eau, c'est à dire un ou plusieurs bac(s) de rétention 21 d'eau.

L'au moins un bac de rétention 21 forme un réservoir temporaire d'eau, c'est-à-dire qu'il est adapté pour stocker temporairement une certaine quantité d'eau. Chaque bac de rétention 21 comprend par exemple un fond, par exemple un fond alvéolé, et une paroi latérale entourant le fond, de sorte à former ledit réservoir temporaire d'eau.

Les bacs de rétention 21 de l'ensemble peuvent par exemple être assemblés les uns aux autres, par exemple de sorte à couvrir une zone de toiture. A cet effet, chaque bac de rétention 21 peut comprendre un ou plusieurs connecteurs. Les connecteurs sont par exemple des connecteurs creux. Les connecteurs peuvent par exemple permettre l'alignement des bacs des bacs et/ou la libre circulation de l'eau entre eux, par exemple en formant des moyens de communication fluidique entre les bacs de rétention 21.

L'au moins un bac de rétention 21 comprend des moyens d'entrée et/ou de sortie 211 d'eau. L'au moins un bac de rétention 21 comprend par exemple des moyens d'entrée d'eau, c'est-à-dire des moyens permettant à l'eau d'arriver dans le réservoir. L'au moins un bac de rétention 21 comprend par exemple des moyens de sortie d'eau, c'est-à-dire des moyens permettant à l'eau de s'échapper du réservoir. L'au moins un bac de rétention 21 peut comprendre à la fois les moyens d'entrée et les moyens de sortie d'eau, qui peuvent être confondus ou distincts. Les moyens d'entrée et/ou de sortie 211 comprennent par exemple un passage 2111 permettant la circulation d'eau, par exemple un passage comprenant un orifice traversant une paroi du bac de rétention 21, par exemple un conduit traversant une paroi du bac de rétention 21 ou débouchant depuis une zone ouverte du bac de rétention 21.

Les moyens d'entrée comprennent par exemple une entrée d'eau. Les moyens de sortie comprennent par exemple une sortie d'eau.

Les moyens d'entrée et/ou de sortie 211 comprennent par exemple une ou plusieurs canalisations. Les moyens d'entrée et/ou de sortie 211 comprennent par exemple des canalisations assemblées.

Les moyens d'entrée et/ou de sortie 211 sont par exemple disposés sur et/ou au travers d'une paroi, par exemple de la paroi latérale, du bac de rétention 21. Les canalisations sont par exemple assemblées sur et/ou au travers d'une paroi, par exemple de la paroi latérale, du bac de rétention 21.

Chaque bac de rétention 21 peut comprendre des moyens d'entrée et/ou de sortie 211 dédiés. Alternativement les bacs de rétention 21 peuvent comprendre des moyens d'entrée et/ou de sortie 211 communs, par exemple de sorte à mettre en communication fluidique les bacs de rétention 21.

L'au moins un bac de rétention 21 peut en particulier comprendre de premiers moyens d'entrée et/ou de sortie 211 et de deuxièmes moyens d'entrée et/ou de sortie 212 distincts des premiers, les deuxièmes moyens d'entrée et/ou de sortie 212 pouvant par exemple être régulés par un dispositif spécifique qui ne peut être commandé à distance tandis que les premiers moyens d'entrée et/ou de sortie 211 peuvent être régulés par un dispositif spécifique qui peut être commandé à distance. Il est ainsi possible de combiner différents types de régulations.

L'au moins un bac de rétention 21 est par exemple un bac de rétention 21 des eaux pluviales ou d'eaux d'arrosage. L'au moins un bac de rétention 21 est par exemple disposé en toiture, ou en terrasse, ou au niveau du sol.

Les moyens d'entrée comprennent et/ou forment par exemple un dispositif d'aspersion d'eau, par exemple disposé en périphérie du bac de rétention. Alternativement ou en complément, les moyens d'entrée comprennent et/ou forment par exemple une ou plusieurs conduite d'alimentation en eau au niveau d'une paroi, par exemple d'une paroi latérale du bac de rétention.

Les moyens de sortie comprennent et/ou forment par exemple un dispositif de vidange d'eau, par exemple disposé en périphérie du bac de rétention et/ou au niveau d'une paroi, par exemple de la paroi latérale ou le fond du bac de rétention.

### Moyens de régulation

L'ensemble 2 comprend des moyens de régulation 23 adaptés pour réguler le débit d'eau à travers les moyens d'entrée et/ou de sortie 21.

Les moyens de régulation 23 permettent par exemple d'établir un débit déterminé d'eau entrant ou sortant. Les moyens de régulation 23 permettent par exemple de bloquer ou de permettre la circulation d'eau. Les moyens de régulation 23 peuvent par exemple permettre différents niveaux de circulation d'eau.

Les moyens de régulation 23 comprennent par exemple un partie mobile adaptée entre une position obstruant les moyens d'entrée et/ou de sortie 211 et une position permettant une circulation fluidique.

Les moyens de régulation 23 comprennent par exemple un organe de régulation, par exemple une électrovanne, permettant de bloquer ou de permettre une circulation d'eau, par exemple en remplissage et/ou en vidange du ou des bacs de rétention 21.

Dans le cas où l'au moins un bac de rétention 21 comprend des premiers et deuxièmes moyens d'entrée et/ou de sortie 211 distincts, le bac de rétention peut 21 comprendre des premiers moyens de régulation 23 associés aux premiers moyens d'entrée et/ou de sortie 211, et des deuxièmes moyens de régulation 24 associés aux deuxièmes moyens d'entrée et/ou de sortie 211, les différents moyens de régulation étant par exemple configurés pour permettre différentes régulations.

L'ensemble 2 comprend au moins une plaque 261 venant s'encastrer dans le ou au moins l'un des bac(s) de rétention 21, ou venue de matière avec le bac ou l'un des bacs de rétention 21, de sorte à s'étendre au-dessus du réservoir d'eau. La plaque 261 peut faire partie d'un autre ensemble disposé au-dessus du bac de rétention 21 et assurant une autre fonction. Il peut s'agir d'un bac de végétalisation 26 comprenant ladite plaque 261, qui peut alors bénéficier de l'eau retenue pour des fins d'irrigation. L'ensemble 2 peut ainsi comprendre au moins un bac de végétalisation 26 comprenant la plaque 261, et de préférence une mèche de remontée capillaire disposée pour permettre une remontée d'eau depuis le bac de rétention 21 en-dessous de la plaque 261 vers le bac de végétalisation 26.

Alternativement, il peut s'agir d'un panneau photovoltaïque, qui peut bénéficier du rafraîchissement de sa sous-face par évaporation de l'eau retenue pour maintenir sa température à un niveau d'efficacité énergétique élevé. Il peut encore s'agir d'une plaque formant un support sur lequel des personnes peuvent marcher, dans quel cas l'eau stockée, outre les avantages propres au stockage, peut permettre de diminuer la température ambiante et ainsi offrir un meilleur confort aux personnes se trouvant sur la toiture ou, si les toitures sont installées à large échelle, de lutter contre le phénomène des ilots de chaleur urbains, c'est-à-dire des élévations de températures localisées et observées en milieu urbain par rapport aux températures des milieux environnants ou de la région correspondante.

### Capteur de niveau

L'ensemble 2 comprend au moins un capteur de niveau 25 configuré pour mesurer le niveau d'eau retenue dans l'au moins un bac de rétention. L'ensemble 2 peut ainsi comprendre une pluralité de bacs de rétention 21, un seul étant muni d'un capteur de niveau 25, ou certains seulement étant munis d'un capteur de niveau 25, les bacs de rétention 21 munis de capteur étant par exemple répartis de sorte à être représentatifs de tous les bacs de rétention 21 de l'ensemble. Même lorsque la toiture est en pente, il est ainsi possible de limiter le nombre de capteurs de niveau 25 utilisés.

Le capteur de niveau 25 est par exemple configuré pour mesurer automatiquement à intervalles réguliers le niveau d'eau. Alternativement, le capteur de niveau 25 est configuré pour mesurer le niveau d'eau sur demande.

Le capteur de niveau 25 est par exemple un capteur à ultrasons.

La plaque 261 présente au moins une alvéole, de sorte que le capteur de niveau 25 s'étend au moins partiellement dans l'alvéole ou de sorte que le capteur de niveau 25 débouche au niveau de l'alvéole. Il est ainsi possible d'améliorer la qualité de la mesure du capteur de niveau 25 en protégeant la zone de mesure. Ceci permet en outre de maximiser la distance entre le capteur de niveau 25 et la surface de l'eau, de sorte à améliorer la qualité de la mesure et à pouvoir mesurer une grande amplitude de niveaux d'eau.

Le capteur de niveau 25 est par exemple intégré au bac de rétention 25 ou disposé au-dessus du bac de rétention 25. Le capteur de niveau 25 est par exemple agencé de sorte à être disposé au-dessus de la surface de l'eau et/ou à la verticale par rapport à la surface de l'eau.

Le capteur de niveau 25 est par exemple configuré pour mesurer la hauteur et/ou la variation du niveau d'eau retenue.

La plaque 261 présente par exemple au moins une ouverture, par exemple une ouverture verticale, de sorte que le capteur de niveau 25 s'étend au moins partiellement, par exemple entièrement, au-dessus de l'ouverture ou de sorte que le capteur de niveau 25 débouche au niveau de l'ouverture.

### Moyens de communication

L'ensemble 2 comprend en outre des moyens de communication 27.

Les moyens de communication 27 comprennent une première interface 271 de communication adaptée pour recevoir des données issues du capteur de niveau 25. La première interface 271 peut ainsi comprendre au moins un récepteur.

Les moyens de communication 27 comprennent une deuxième interface 272 de communication avec un serveur distant 3. La deuxième interface 272 peut ainsi comprendre au moins un transmetteur. La communication est par exemple une communication sans fil, par exemple une communication radio, par exemple radio hautes fréquences, par exemple GSM et/ou GPRS.

Les moyens de communication 27 comprennent des moyens de traitement 273 de données. Les moyens de traitement 273 sont configurés pour traiter des données reçues par la première interface. Le traitement peut comprendre le traitement des données pour permettre leur transmission par la deuxième interface de communication 272. Les moyens de traitement 273 sont configurés pour que les moyens de communication 27 transmettent des données traitées via la deuxième interface de communication 272.

Il est ainsi possible d'obtenir des informations sur l'état des bacs de rétention à distance. Ceci permet de nombreux avantages, comme le suivi de l'état de remplissage des bacs de rétention, le débit de vidange, le décompte des débordements, du comportement et des performances de l'ensemble 2. Il est également possible d'établir le comportement de l'ensemble disposé par exemple en toiture ou en terrasse vis-à-vis des conditions d'utilisation, et donc de détecter un éventuel dysfonctionnement de l'ensemble 2. Le fonctionnement de l'ensemble s'en trouve amélioré car il est possible de le suivre avec beaucoup plus de précision et de savoir si une opération de maintenance est nécessaire.

Les moyens de traitement 273 peuvent être configurés pour commander le capteur de niveau 25 en fonction d'une commande de mesure de niveau.

Il est ainsi possible de commander la mesure du niveau et donc de permettre de diminuer l'énergie consommée par le capteur de niveau 25.

La commande de mesure de niveau peut être élaborée par les moyens de traitement 273. Il est ainsi possible pour l'ensemble d'agir de manière automatique et autonome. L'élaboration de la commande de mesure de niveau peut être telle que le capteur de niveau 25 est piloté pour fournir une mesure à intervalles réguliers.

Alternativement, la commande de mesure de niveau peut être reçue par la deuxième interface 272 de communication sans fil depuis le serveur distant 3. Il est ainsi possible de commander le comportement de l'ensemble à distance, par exemple à l'aide des informations précédemment obtenues des capteurs et éventuellement d'autres informations. Par exemple, si des pluies sont prévues dans un avenir proche, des commandes de mesure de niveau peuvent être fournies à une fréquence élevée pour mieux suivre une période où le niveau d'eau risque d'évoluer rapidement.

La première interface 271 de communication peut être adaptée pour mettre en oeuvre une communication sans fil, de préférence une communication locale sans fil, avec le capteur de niveau 25. Il est ainsi possible de communiquer avec le capteur de niveau 25 indépendamment de sa position par rapport aux moyens de communication. La communication sans fil est par exemple une communication de type Bluetooth ou wifi.

Les moyens de traitement 273 sont par exemple configurés pour élaborer de manière automatique et autonome une commande de transmission des données traitées via la deuxième interface de communication 272. L'élaboration de la commande de transmission peut être telle que le serveur distant reçoit des données traitées à des intervalles de temps permettant une consultation et un traitement d'analyse des données traitées par le serveur distant.

Alternativement, la commande de transmission peut être reçue par la deuxième interface 272 de communication sans fil depuis le serveur distant 3, et peut par exemple correspondre à la commande de mesure de niveau ou correspondre à une commande de mesures déjà réalisées et stockées. Il est ainsi possible de commander le comportement de l'ensemble à distance, par exemple à l'aide des informations précédemment obtenues des capteurs et éventuellement d'autres informations. Par exemple, si des pluies sont prévues dans un avenir proche, des commandes de transmission peuvent être fournies à une fréquence élevée pour mieux suivre une période où le niveau d'eau risque d'évoluer rapidement.

Les moyens de communication peuvent comprendre en outre des moyens de stockage de données de niveau d'eau. Les moyens de communication peuvent ainsi former un enregistreur. Ceci permet de stocker des données pour pouvoir traiter des informations agrégées dans le temps.

Les moyens de communication peuvent comprendre des moyens d'horodatage des données issues du capteur de niveau. Il est ainsi possible de réaliser un suivi dans le temps des valeurs mesurées et d'obtenir des données enrichies.

Les moyens de traitement 273 peuvent être configurés pour commander les moyens de régulation 23 en fonction d'une commande de débit. La commande de débit peut être une commande de remplissage et/ou de vidange.

Il est ainsi possible de commander l'arrivée et/ou la sortie d'eau de l'ensemble, et donc de permettre une gestion plus fine de l'eau retenue par l'ensemble 2.

La commande de débit peut être élaborée par les moyens de traitement au moins à partir des données issues du capteur de niveau. Il est ainsi possible pour l'ensemble d'établir une commande adaptée de manière automatique et autonome.

Les moyens de traitement 273 comprennent par exemple un processeur et/ou un circuit imprimé, configuré(s) pour mettre en oeuvre les fonctions décrites.

Alternativement, la commande de débit peut être reçue par la deuxième interface 272 de communication sans fil depuis le serveur distant 3. Il est ainsi possible de commander le comportement de l'ensemble à distance, à l'aide des informations obtenues des capteurs et éventuellement d'autres informations. Par exemple, si les bacs de rétention sont remplis d'eau et que des pluies sont prévues dans un avenir proche, une commande d'ouverture complète des moyens de régulation peut être fournie pour vider les bacs de rétention et leur permettre d'absorber efficacement les précipitations à venir, sans déborder ou au moins en limitant le débordement.

La commande de débit et/ou de mesure de niveau, et/ou de transmission et/ou tout autre commande reçue par l'ensemble ou émise par l'ensemble, ou tout groupe, par exemple ensemble et/ou suite, de telles commandes formant un pilotage, peut viser la lutte contre des ilots de chaleur au niveau de la toiture, et donc permettre par exemple l'amélioration du rendement des panneaux photovoltaïques par rafraichissement ou à plus grande échelle le rafraichissement d'un quartier urbain pendant une période de fortes chaleurs. Dans le cas d'une toiture végétalisée, une telle commande peut viser la préservation des plantes. En outre, une telle commande ou un tel groupe de commandes peut avoir pour objectif la réutilisation de l'eau, par exemple pour un usage domestique tel que l'alimentation d'une citerne, l'irrigation ou l'arrosage de jardins. Une telle commande ou un tel groupe de commandes peut également avoir des usages techniques, tels que l'arrosage ou l'irrigation de mur végétalisé, ou la réutilisation des eaux usées pour des usages adaptés.

Ainsi, l'ensemble 2 peut comprendre en outre un mur végétalisé, et des moyens d'irrigation du mur végétalisé connectés aux moyens d'entrée et/ou de sortie 211.

La commande peut être obtenue en prenant en compte les contraintes locales spécifiques en termes de surcharge de la toiture, ou de maitrise, limitation du débit d'eau et des volumes rejetés, par exemple par une programmation telle que la commande vise à limiter la hauteur de réserve d'eau stockée et donc l'optimisation du poids.

Les moyens de communication 27 peuvent comprendre une troisième interface 274 de communication, par exemple sans fil, par exemple locale, adaptée pour communiquer avec les moyens de régulation 23. Il est ainsi possible de commander les moyens de régulation 23 indépendamment de leur position par rapport aux moyens de communication. La communication sans fil est par exemple une communication de type Bluetooth ou wifi.

Les moyens de traitement 273 sont par exemple configurés pour commander les moyens de régulation 23 de sorte à ajuster le niveau d'eau retenue, par exemple de sorte à éviter un débordement et/ou un assèchement du réservoir temporaire d'eau.

### Capteur de pluviométrie

L'ensemble 2 peut comprendre en outre un capteur de pluviométrie 28. La première interface 271 de communication peut être adaptée pour recevoir des données issues du capteur de pluviométrie 28. Il est ainsi possible d'obtenir des informations et de commander la régulation des bacs de rétention 21 en prenant en outre en compte des éléments de pluviométrie locale. En particulier, la connaissance de la pluviométrie, couplée au niveau d'eau et aux informations relatives à la structure de l'ensemble, peut permettre d'établir le débit d'eau au niveau des moyens d'entrée et/ou de sortie 211.

En particulier, les moyens de traitement 273 peuvent être configurés pour calculer une grandeur telle qu'un débit ou un volume d'eau rejeté et/ou accepté par le ou les bac(s) de rétention 21 à partir des données traitées. La grandeur calculée est par exemple exprimée en valeur instantanée ou cumulée sur une période de temps. Il peut s'agir d'une grandeur arithmétique, c'est à dire qu'elle peut exprimer une entrée comme une sortie d'eau. Par rejet d'eau, on entend par exemple l'eau rejetée par les moyens d'entrée et/ou de sortie, et/ou l'eau débordant du bac ou des bacs de rétention

### Système

Le serveur distant 3 du système 1 peut être configuré pour communiquer avec la deuxième interface 272.

Le serveur distant 3 peut en outre être configuré pour calculer une grandeur telle qu'un débit ou un volume d'eau rejeté par le ou les bac(s) de rétention 21 à partir des données traitées. La grandeur calculée est par exemple exprimée en valeur instantanée ou cumulée sur une période de temps

Les moyens de traitement 273 peuvent être configurés pour commander les moyens de régulation à partir d'une commande de débit, et le serveur distant 3 peut être configuré pour élaborer la commande de débit au moins à partir des données traitées reçues de l'ensemble 2, et envoyer à l'ensemble 2 la commande de débit ainsi élaborée.

## Revendications

1. Ensemble de rétention temporaire d'eau, comprenant :
- un ou plusieurs bac(s) de rétention (21) d'eau formant un réservoir temporaire d'eau et comprenant des moyens d'entrée et/ou de sortie (211) d'eau,
- des moyens de régulation (23) adaptés pour réguler le débit d'eau à travers les moyens d'entrée et/ou de sortie (211), l'ensemble comprenant en outre :
- un capteur de niveau (25) configuré pour mesurer le niveau d'eau retenue dans le ou l'un des bacs de rétention (21), et
- des moyens de communication (27) comprenant :
∘ une première interface (271) de communication adaptée pour recevoir des données issues du capteur de niveau (25),
∘ une deuxième interface (272) de communication avec un serveur distant (3), et
∘ des moyens de traitement (273) de données configurés pour traiter des données reçues par la première interface (271) et pour que les moyens de communication (27) transmettent des données traitées au serveur distant via la deuxième interface de communication (272), et
au moins une plaque (261) venant s'encastrer dans le ou au moins l'un des bac(s) de rétention, ou venue de matière avec le bac ou l'un des bacs de rétention (21), de sorte à s'étendre au-dessus du réservoir d'eau, **caractérisé en ce que** la plaque (261) présente au moins une alvéole, de sorte que le capteur de niveau (25) s'étend au moins partiellement dans l'alvéole ou de sorte que le capteur de niveau (25) débouche au niveau de l'alvéole.

2. Ensemble selon la revendication 1, dans lequel les moyens de traitement (273) sont configurés pour commander les moyens de régulation (23) en fonction d'une commande de débit.

3. Ensemble selon la revendication 2, dans lequel la commande de débit est reçue par la deuxième interface (272) de communication depuis le serveur distant (3).

4. Ensemble selon l'une des revendications précédentes, dans lequel les moyens de communication (27) comprennent une troisième interface (274) de communication sans fil adaptée pour communiquer avec les moyens de régulation (23).

5. Ensemble selon l'une des revendications précédentes, dans lequel la première interface (271) de communication est adaptée pour mettre en oeuvre une communication sans fil, de préférence une communication locale sans fil, avec le capteur de niveau (25).

6. Ensemble selon l'une des revendications précédentes, dans lequel le capteur de niveau (25) est un capteur à ultrasons.

7. Ensemble selon l'une des revendications précédentes, comprenant en outre un capteur de pluviométrie (28), la première interface de communication (271) étant adaptée pour recevoir des données issues du capteur de pluviométrie (28).

8. Système de gestion d'eau comprenant :
- un ensemble (2) selon l'une des revendications précédentes, et
- un serveur distant (3) configuré pour communiquer avec la deuxième interface (272).

## Patentansprüche

1. Temporäre Rückhaltegruppe für Wasser, umfassend:
- ein oder mehrere Wasser-Rückhaltebecken (21), das / die einen temporären Wassertanke bildet / bilden und Wasser-Eintritts- und / oder -Austrittsmittel (211) umfasst / umfassen;
- Regulierungsmittel (23), die zum Regulieren des Wasserdurchsatzes durch die Eintritts- und / oder Austrittsmittel (211) geeignet sind;
wobei die Gruppe darüber hinaus umfasst:
- einen Pegelsensor (25), der ausgestaltet ist, um den zurückgehaltenen Wasserstand in dem oder einem der Rückhaltebecken (21) zu messen und
- Kommunikationsmittel (27), umfassend:
∘ eine erste Kommunikationsschnittstelle (271), die geeignet ist, um Daten zu empfangen, die aus dem Pegelsensor (25) stammen,
∘ eine zweite Kommunikationsschnittstelle (272) mit einem entfernen Server (3) und
∘ Datenverarbeitungsmittel (273), die ausgestaltet sind, um Daten zu verarbeiten, die von der ersten Schnittstelle (271) empfangen sind und damit die Kommunikationsmittel (27) verarbeitete Daten über die zweite Kommunikationsschnittstelle (272) auf den entfernten Server übertragen, und
wenigstens eine Platte (261), die in das oder wenigstens eines der Rückhaltebecken eingreift oder mit dem Becken oder einem der Rückhaltebecken (21) aus einem Material gefertigt ist, derart, dass sie sich oberhalb des Wassertanks erstreckt,
**dadurch gekennzeichnet, dass** die Platte (261) wenigstens eine Wabe derart aufweist, dass der Pegelsensor (25) sich wenigstens teilweise in der Wabe erstreckt, oder derart, dass der Pegelsensor (25) an der Wabe mündet.

2. Gruppe gemäß Anspruch 1, bei der die Verarbeitungsmittel (273) ausgestaltet sind, um die Regulierungsmittel (23) in Abhängigkeit von einem Durchsatzbefehl zu steuern.

3. Gruppe gemäß Anspruch 2, bei der die Durchsatzsteuerung von der zweiten Kommunikationsschnittstelle (271) ausgehend vom entfernten Server (3) aufgenommen ist.

4. Gruppe gemäß einem der voranstehenden Ansprüche, bei der die Kommunikationsmittel (27) eine dritte, drahtlose Kommunikationsschnittstelle (274) umfassen, die geeignet ist, um mit den Regulierungsmitteln (23) zu kommunizieren.

5. Gruppe gemäß einem der voranstehenden Ansprüche, bei der die erste Kommunikationsschnittstelle (271) geeignet ist, um eine drahtlose Kommunikation, bevorzugt eine lokale drahtlose Kommunikation, mit dem Pegelsensor (25) umzusetzen.

6. Gruppe gemäß einem der voranstehenden Ansprüche, bei der der Pegelsensor (25) ein Ultraschallsensor ist.

7. Gruppe gemäß einem der voranstehenden Ansprüche, umfassend darüber hinaus einen Niederschlagsmessungs-Sensor (28), wobei die erste Kommunikationsschnittstelle (271) geeignet ist, um Daten zu empfangen, die aus dem Niederschlagsmessungs-Sensor (28) stammen.

8. Wasser-Verwaltungssystem, umfassend:
- eine Gruppe (2) gemäß einem der voranstehenden Ansprüche und
- einen entfernten Server (3), der ausgestaltet ist, um mit der zweiten Schnittstelle (272) zu kommunizieren.

## Claims

1. Temporary water retention assembly, comprising:
- one or more water retaining tanks (21) forming a temporary water reservoir and comprising water inlet and/or outlet means (211),
- regulation means (23) adapted to regulate the flow of water through the inlet and/or outlet means (211), the assembly further comprising:
- a level sensor (25) configured to measure the level of water retained in the or in one of the retaining tanks (21), and
- communication means (27) comprising:
∘ a first communication interface (271) adapted to receive data from the level sensor (25),
∘ a second communication interface (272) with a remote server (3), and
∘ data processing means (273) configured to process data received by the first interface (271) and so that the communication means (27) transmit processed data to the remote server via the second communications interface (272), and at least one plate (261) embedded in the or in one of the retaining tanks, or made of the same material with the tank or one of the retaining tanks (21), in such a way as to extend above the water reservoir,
**characterised in that** the plate (261) has at least one cell, in such a way that the level sensor (25) extends at least partially in the cell or in such a way that the level sensor (25) opens onto the cell.

2. Assembly according to claim 1, wherein the processing means (273) are configured to control the regulation means (23) according to a control of the flow rate.

3. Assembly according to claim 2, wherein the flow rate control is received by the second communications interface (272) from the remote server (3).

4. Assembly according to one of the preceding claims, wherein the communication means (27) comprise a third wireless communications interface (274) adapted to communicate with the regulation means (23).

5. Assembly according to one of the preceding claims, wherein the first communications interface (271) is adapted to implement a wireless communication, preferably a local wireless communication, with the level sensor (25).

6. Assembly according to one of the preceding claims, wherein the level sensor (25) is an ultrasound sensor.

7. Assembly according to one of the preceding claims, further comprising a rainfall sensor (28), the first communication interface (271) being adapted to receive data from the rainfall sensor (28).

8. Water management system comprising:
- an assembly (2) according to one of the preceding claims, and
- a remote server (3) configured to communicate with the second interface (272).
